# EUROPÄISCHE PATENTSCHRIFT

(11) **EP 0 646 503 B1**
(45) Veröffentlichungstag und Bekanntmachung des Hinweises auf die Patenterteilung: **25.02.1998**
(21) Anmeldenummer: 94114411.5
(22) Anmeldetag: 14.09.1994
(51) Int. Cl.: B60R 22/18

(54) **Sicherheitsgurtanordnung für eine Hintersitzanlage eines Kraftfahrzeuges**
Safety belt arrangement for the back seat of a vehicle
Disposition de ceinture de sécurité pour les sièges arrières d'un véhicule automobile

(30) Priorität: 05.10.1993 DE 4333873
(43) Veröffentlichungstag der Anmeldung: 05.04.1995
(73) Patentinhaber: Dr.Ing.h.c. F. Porsche Aktiengesellschaft, 70435 Stuttgart (DE)
(72) Erfinder: Kneip, Rainer, D-71735 Eberdingen (DE); Mäsing, Alfons, D-71299 Wimsheim (DE)

(56) Entgegenhaltungen:
- EP-A- 0 364 131
- US-A- 3 961 807

## Beschreibung

Die Erfindung bezieht sich auf eine Sicherheitsgurtanordnung für eine Sitzanlage eines Kraftfahrzeuges nach dem Oberbegriff des Hauptanspruches.

Die EP-A-364 131 offenbart eine Sicherheitsgurtanordnung für zwei nebeneinanderliegend angeordnete vordere Sitze eines Kraftfahrzeuges, wobei die oberen Umlenkelemente von schräg verlaufenden Diagonalgurten an aufrechten Schenkein eines zwischen den Sitzen angeordneten Tragrahmens vorgesehen sind und zwar etwa in Höhe der Oberkante der Rückenlehnen. Die oberen Umlenkelemente sind deshalb an einem Tragrahmen vorgesehen, weil die beiden Dreipunktgurte für die Insassen der vorderen Sitze als passive Sicherheitsgurtsysteme ausgebildet sind, d.h. beim Schließen der Türen legt sich der Sicherheitsgurt selbsttätig an die Insassen an.

Aus der DE 40 01 119 A 1 geht eine durchgehende Rücksitzbank für ein geschlossenes Kraftfahrzeug hervor, wobei an der Rücksitzbank 3-Punkt-Gurte für die Fondinsassen vorgesehen sind.

Die oberen, etwa in Schulterhöhe der Fondinsassen vorgesehenen Gurtpunkte werden durch Umlenkelemente gebildet, die benachbart der Fahrzeugmitte an der durchgehenden Rücksitzbank angeordnet und am Aufbau befestigt sind.

Aufgabe der Erfindung ist es, an einem mit einem Verdeck versehenen offenen Kraftfahrzeug im Bereich der Hintersitzanlage solche Vorkehrungen zu treffen, daß beide Sitzplätze der Hintersitzanlage mit einem 3-Punkt-Gurt ausgerüstet werden können und die Sicherheitsgurte sowohl in der Offenstellung als auch der Schließstellung des Verdecks uneingeschränkt benutzbar sind.

Erfindungsgemäß wird diese Aufgabe durch die kennzeichnenden Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß durch die Anordnung eines Tragrahmens zwischen den beiden Sitzen der Hintersitzanlage mit den daran vorgesehenen oberen Umlenkelementen 3-Punkt-Gurte für die beiden hinteren Sitzplätze verwendet werden können, die sowohl in der zurückgeklappten Offenstellung als auch in der Schließstellung des Verdecks uneingeschränkt nutzbar sind.

Der Tragrahmen weist einen stabilen Aufbau auf und ist in der Lage, hohe Kräfte aufzunehmen. Er ist einfach herstellbar und kann auf einfache Weise in vorhandene Cabrios nachgerüstet werden.

Ferner sind in den Tragrahmen Halterungen für die beiden untenliegenden Gurtaufroller sowie einstellbare Verriegelungsbolzen zur Arretierung der beiden Rückenlehnen in ihrer Gebrauchsstellung und untere Lagerabschnitte für die Rückenlehnen integriert.

Ein Ausführungsbeispiel der Erfindung ist in der nachfolgenden Beschreibung und der zugehörigen Zeichnung näher dargestellt.

Ein Ausführungsbeispiel der Erfindung ist in der nachfolgenden Beschreibung und der zugehörigen Zeichnung näher dargestellt.
Es zeigt
- Fig. 1: eine perspektivische Ansicht von schräg vorne auf eine Hintersitzanlage eines offenen Kraftfahrzeuges mit dem verkleideten Tragrahmen, wobei die rechte Rückenlehne ihre Gebrauchsstellung einnimmt und die linke Rückenlehne heruntergeklappt ist,
- Fig. 2: eine Ansicht von vorne auf den Tragrahmen ohne die Verkleidung,
- Fig. 3: einen Schnitt nach der Linie III-III der Fig. 2, der den Tragrahmen mit der angedeuteten Verkleidung zeigt,

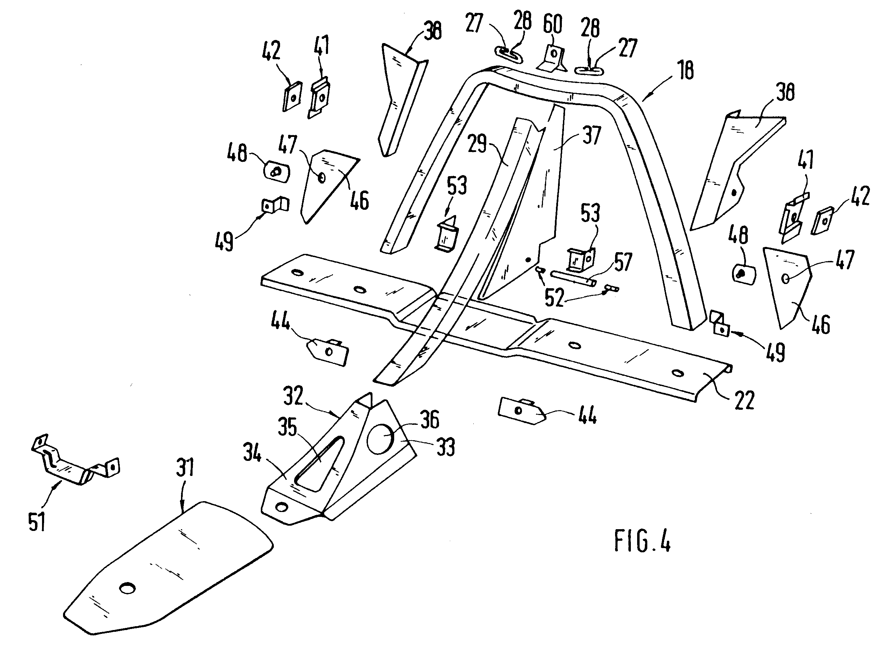

- Fig. 4: die Einzelteile des Tragrahmens ohne Verkleidung in Explosionsdarstellung,
- Fig. 5: eine perspektivische Ansicht von schräg vorne auf die Verkleidung des Tragrahmens,
- Fig. 6: einen Schnitt der Linie VI-VI der Fig. 3 in größerem Maßstab,
- Fig. 7: einen Schnitt nach der Linie VII-VII der Fig. 3 in größerem Maßstab,
- Fig. 8: einen Schnitt nach der Linie VIII-VIII der Fig. 2 in größerem Maßstab,
- Fig. 9: einen Schnitt nach der Linie IX-IX der Fig. 3 in größerem Maßstab,
- Fig. 10: einen Schnitt nach der Linie X-X der Fig. 3 in größerem Maßstab,
- Fig. 11: einen Schnitt nach der Linie XI-XI der Fig. 2 in größerem Maßstab,
- Fig. 12: einen Schnitt nach der Linie XII-XII der Fig. 2 in größerem Maßstab,
- Fig. 13: einen Schnitt nach der Linie XIII-XIII der Fig. 2 in größerem Maßstab,

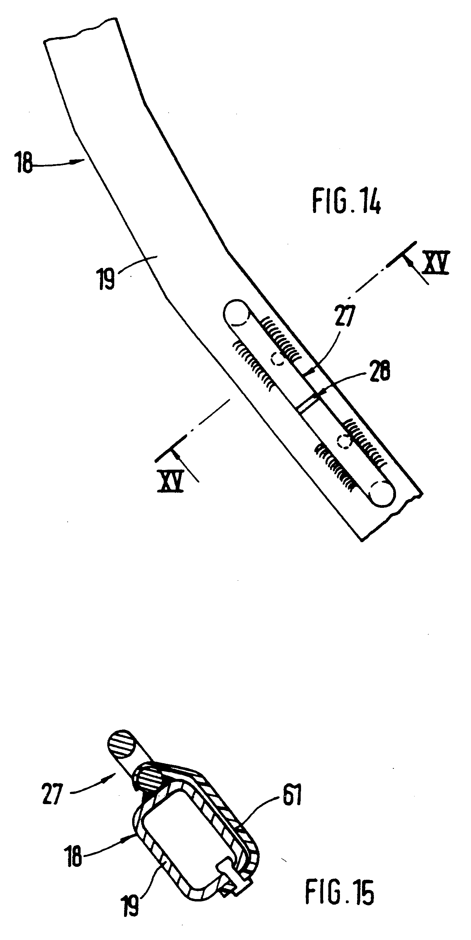

- Fig. 14: eine Ansicht in Pfeilrichtung R der Fig. 3 in größerem Maßstab und
- Fig. 15: einen Schnitt nach der Linie XV-XV der Fig.14.

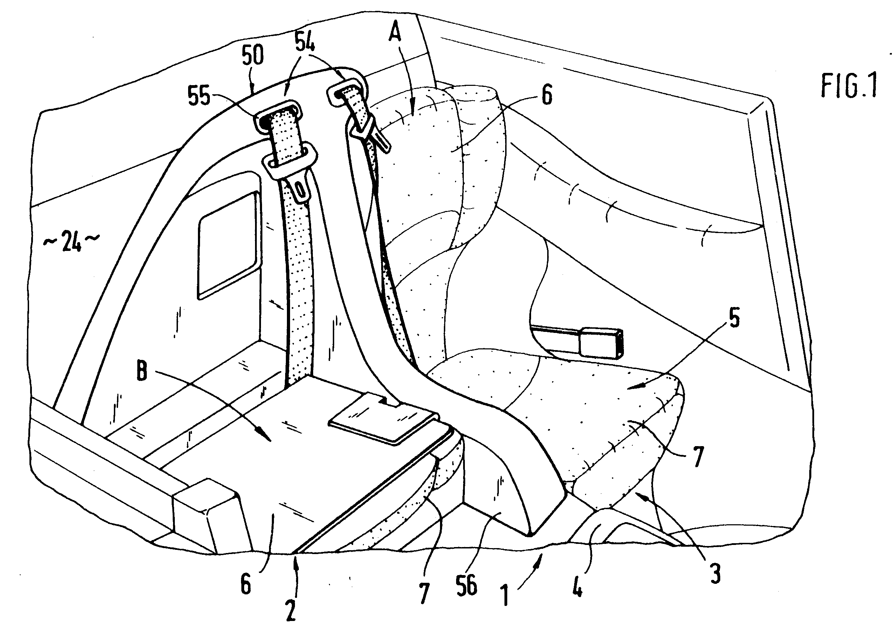

Fig. 1 zeigt eine Hintersitzanlage 1 eines nicht näher dargestellten Kraftfahrzeuges (Personenwagen), welches oberhalb einer Gürtellinie ein Klappverdeck aufweist, das von einer Schließstellung in eine heckseitige Offenstellung bewegbar ist und umgekehrt.

Die Hintersitzanlge 1 umfaßt zwei nebeneinanderliegend angeordnete Sitzplätze 2 und 3 für nicht näher gezeigte Fondinsassen.
Zwischen den Sitzplätzen 2 und 3 erstreckt sich ein längsverlaufender, hochgezogener Tunnel 4 des Aufbaus.

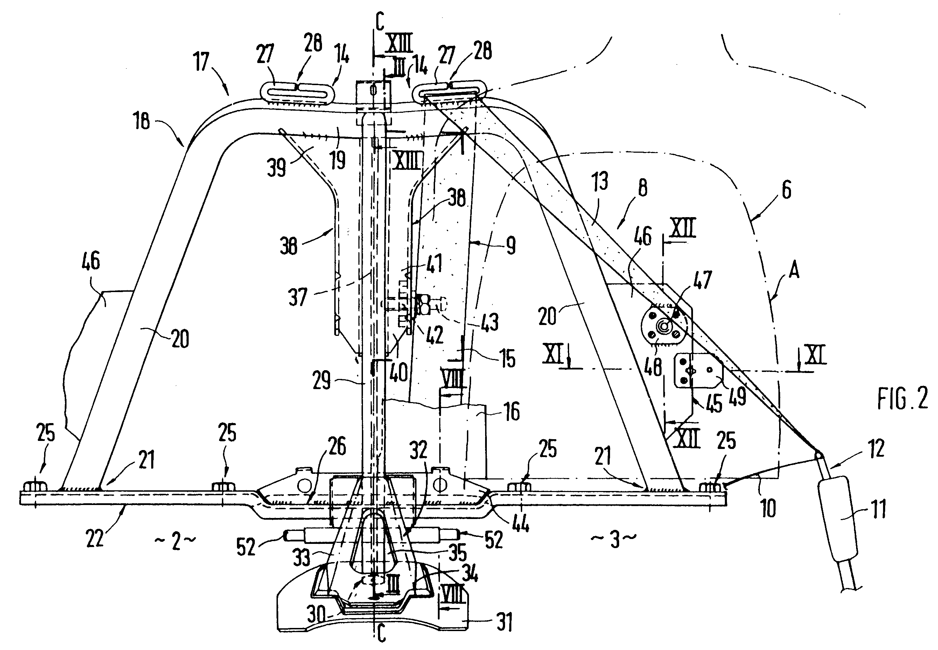

Jeder Sitzplatz 2, 3 setzt sich aus einem feststehenden Sitzteil 5 und einer Rückenlehne 6 zusammen. Das Sitzeil 5 umfaßt eine aufbauseitig ausgebildete Sitzmulde, in die ein Sitzkissen 7 eingesetzt ist.
Die beiden Rückenlehnen 6 sind - in Fahrzeugquerrichtung gesehen - getrennt voneinander ausgebildet und schwenkbar gelagert, so daß sie bei Bedarf von einer aufrechten Gebrauchsstellung A nach unten in eine Ruhestellung B abklappbar sind, in der sie auf den jeweiligen Sitzkissen 7 aufliegen. Die Rückenlehnen 6 können jedoch auch starr ausgebildet sein, d.h. nicht verschwenkbar. Zur Halterung eines in Fig. 2 abschnittsweise angedeuteten Fondinsassen ist eine Sicherheitsgurtanordnung 8 vorgesehen, die im Ausführungsbeispiel durch je einen Dreipunktgurt 9 für jeden Sitzplatz 2, 3 gebildet wird.
Jeder Dreipunktgurt 9 erstreckt sich von einem unteren, am Tunnel 4 vorgesehenen Befestigungspunkt zunächst als Beckengurt 10 im wesentlichen horizontal, über den Beckenbereich des Fondinsassen zu einem auf der gegenüberliegenden Seite des Sitzplatzes 2, 3 in einem Gurtschloß 11 eingerasteten Umlenkbeschlag 12.
Von dort ist das Gurtband als Schrägschultergurt 13 im wesentlichen diagonal über den Oberkörper das Fondinsassen zu einem etwa in Schulterhöhe angebrachten Umlenkelement 14 weitergeführt.
Nach dem Umlenkelement 14 verläuft ein Gurtbandabschnitt 15 vertikal nach unten und wirkt an seinem freien Ende mit einem Gurtaufroller 16 zusammen.
Das Gurtschloß 11 ist benachbart der außenliegenden Fahrzeuglängsseite am Boden oder an der Seitenwand des Aufbaus in einem Befestigungspunkt gehalten.

Erfindungsgemäß ist zwischen beiden Sitzen 2, 3 der Hintersitzanlage 1 und zwar zwischen den geteilten, nebeneinanderliegend angeordneten Rückenlehnen 6 ein Tragrahmen 17 vorgesehen, an dem die oberen Umlenkelemente 14 der Sicherheitsgurtanordnung 8 anbringbar sind.
Der Tragrahmen 17 umfaßt einen sich in Fahrzeugquerrichtung hinter den beiden Rückenlehnen 6 erstreckenden, etwa U-förmig ausgebildeten Rohrbügel 18.
Dieser setzt sich aus einem oberen, quer verlaufenden Verbindungssteg 19 und zwei schräg nach unten und außen hin gerichteten Schenkeln 20 zusammen, wobei die unteren Enden 21 der beiden Schenkel 20 mit einer quer verlaufenden Befestigungsplatte 22 fest verbunden sind.
Der Verbindungssteg 19 ist in der Vorder- und Seitenansicht gesehen jeweils leicht gebogen ausgebildet.
Die Befestigungsplatte 22 ist dem Formverlauf eines quer verlaufenden darunterliegenden Bodenabschnitts 23 einer Rückwand 24 angepaßt und wird durch mehrere Befestigungsschrauben 25 mit dem Bodenabschnitt 23 verbunden.
Der Bodenabschnitt 23 weist im Bereich der Befestigungsschrauben 25 nicht näher dargestellte Verstärkungen und Gewindemuttern auf, in die Befestigungsschrauben eindrehbar sind. In einem mittleren Bereich ihrer Quererstreckung ist die Befestigungsplatte 22 mit einer nach unten gerichteten Abstellung 26 versehen.

Die Umlenkelemente 14 werden im Ausführungsbeispiel durch ringförmige Gurtbandösen 27 gebildet, die sich in Fahrzeugquerrichtung erstrecken und auf die Oberseite des Verbindungsstegs 19 aufgesetzt sind. Die beiden Gurtbandösen 27 verlaufen mit Abstand zueinander und zwar jeweils mit geringem Abstand zu einer Fahrzeuglängsmittelebene C-C. Jede Gurtbandöse 27 weist an ihrer Oberseite eine schmale vertikale Aussparung 28 auf, durch die das Gurtband einführbar ist. Das Umlenkelement 14 kann jedoch auch durch einen Umlenkbeschlag, ein Führungsteil aus Kunststoff oder dgl. gebildet werden, das in einem oberen etwa in Schulterhöhe liegenden Bereich des Tragrahmens 17 anbringbar ist.

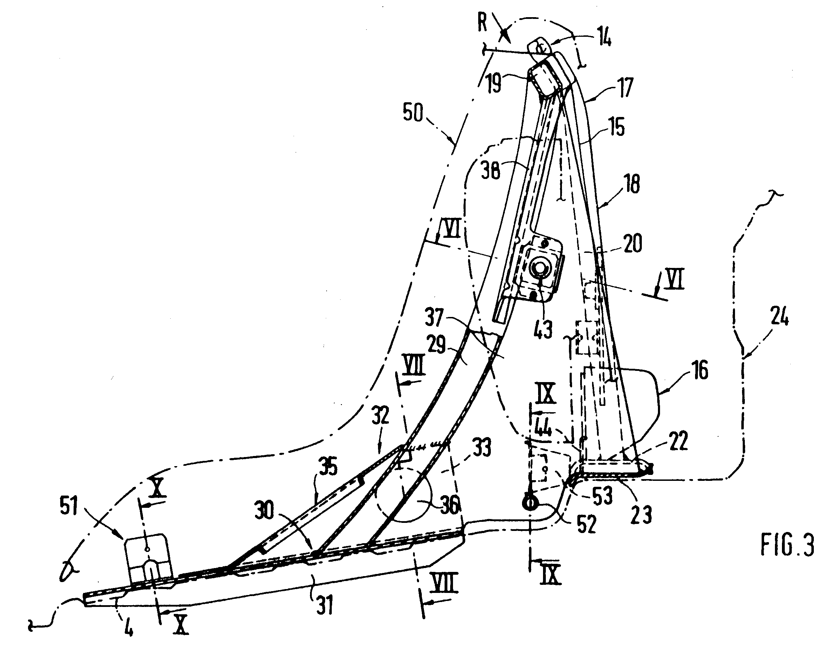

Zur Aufnahme großer Kräfte ist von einem mittleren Bereich des oberen Verbindungssteges 19 - etwa in einer Fahrzeugmittellängsebene C-C - ein nach vorne und unten ragender Stützholm 29 weggeführt, dessen unteres - in Fahrtrichtung gesehen - , vor den Rückenlehnen 6 liegendes Ende 30 mit einer großflächigen längsgerichteten Halteplatte 31 fest verbunden ist.
Die Halteplatte 31 ist der oberen Kontur des Tunnels 4 angepaßt und liegt auf dieser auf. Der Stützholm 29 kann - in der Seitenansicht gesehen - einen geradlinigen oder einen gebogenen Formverlauf aufweisen (Fig. 3).
Der Rohrbügel 18 und der Stützholm 29 sind im Ausführungsbeispiel als Vierkantrohre ausgebildet. Es können jedoch auch Rohre mit einem anderen Querschnitt für den Rohrbügel 18 und den Stützholm 29 verwendet werden.

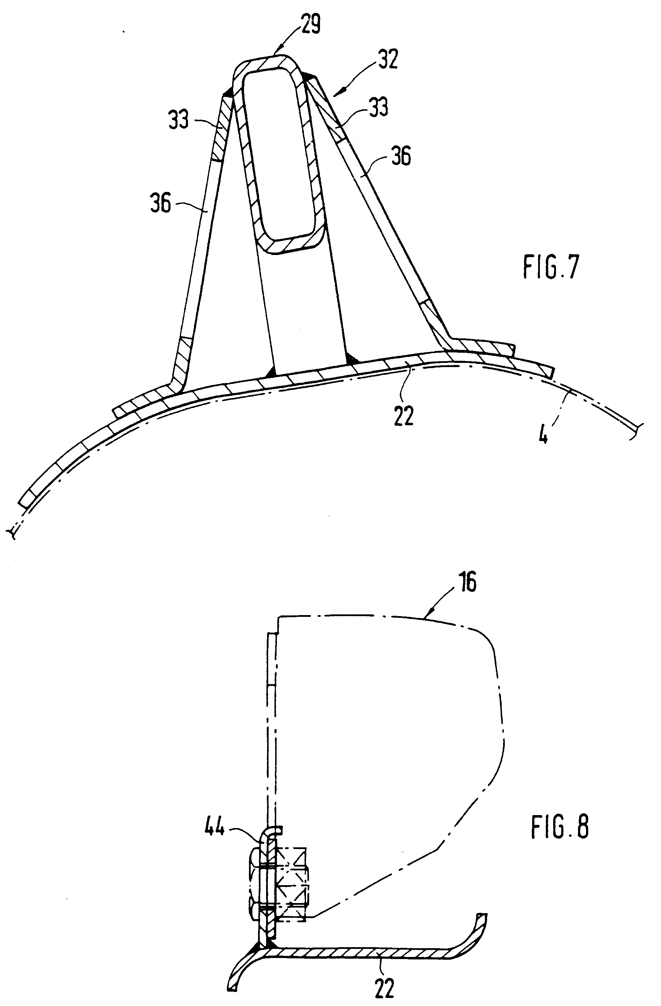

Zur wirkungsvollen Krafteinleitung vom Stützholm 29 in die etwa horizontal ausgerichtete, längsverlaufende Halteplatte 31 ist ein schuhförmiges Element 32 vorgesehen, das mit dem Stützholm 29 und der darunterliegenden Halteplatte 31 eine hohlträgerartige Struktur bildet (Fig. 2 und 7).
Das schuhförmige Element 32 erweitert sich vom Stützholm 29 zur Halteplatte 31 hin kontinuierlich. An beiden Seitenwänden 33 des Elementes 32 und an der schrägverlaufenden Vorderseite 34 sind Öffnungen 35, 36 vorgesehen.
An der der Rückwand 24 zugekehrten Seite des Stützholmes 29 ist eine vertikal ausgerichtete Versteifungsplatte 37 vorgesehen, die an den Stützholm 29, die querverlaufende Befestigungsplatte 22 und die längsgerichtete Halteplatte 31 angeschlossen ist.
Die Versteifungsplatte 37 ist - in der Seitenansicht gesehen - etwa dreieckförmig ausgebildet, wobei die dem Stützholm 29 zugekehrte Seite der Versteifungsplatte 37 gemäß Fig. 3 eine an den gebogenen Formverlauf des Stützholmes 29 angepaßte Kontur aufweist.

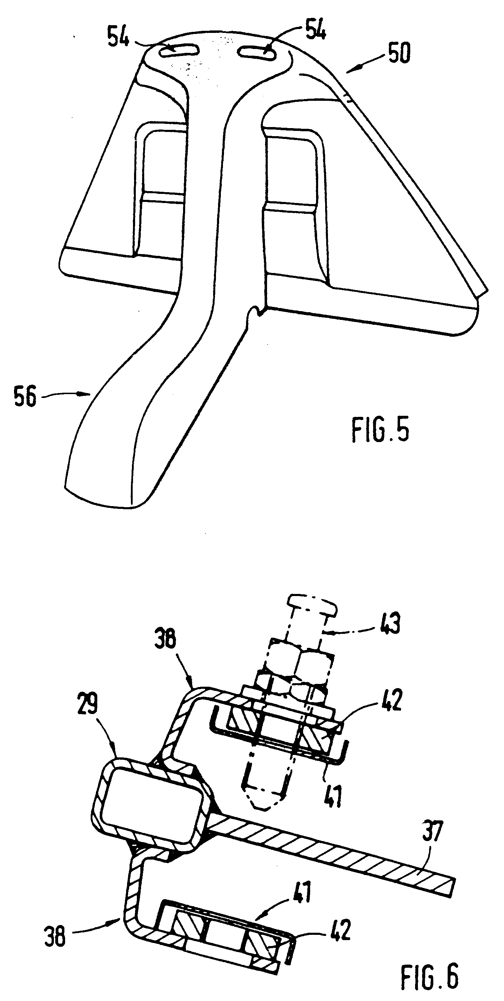

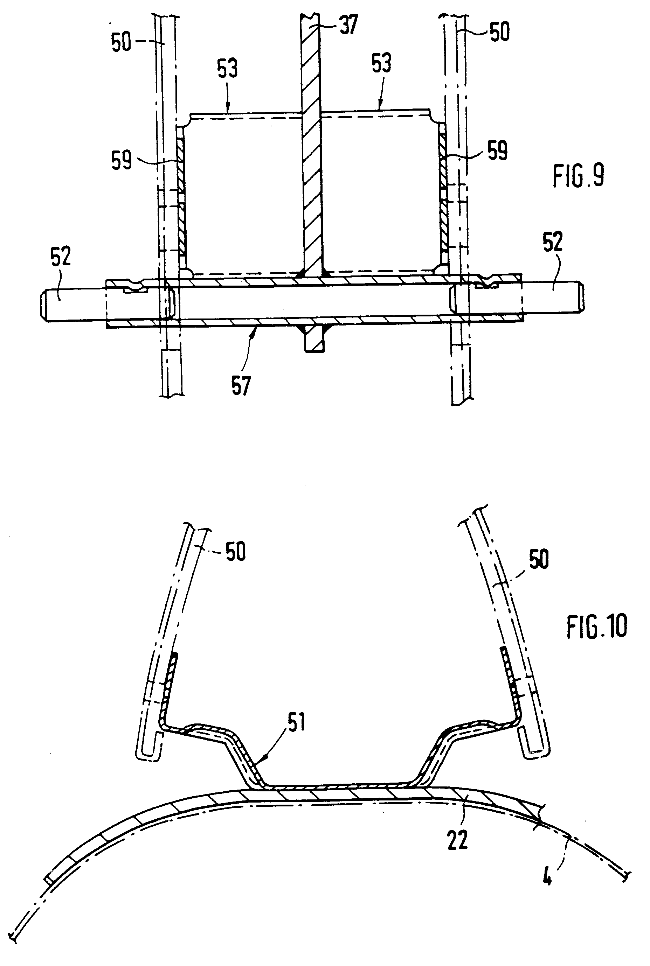

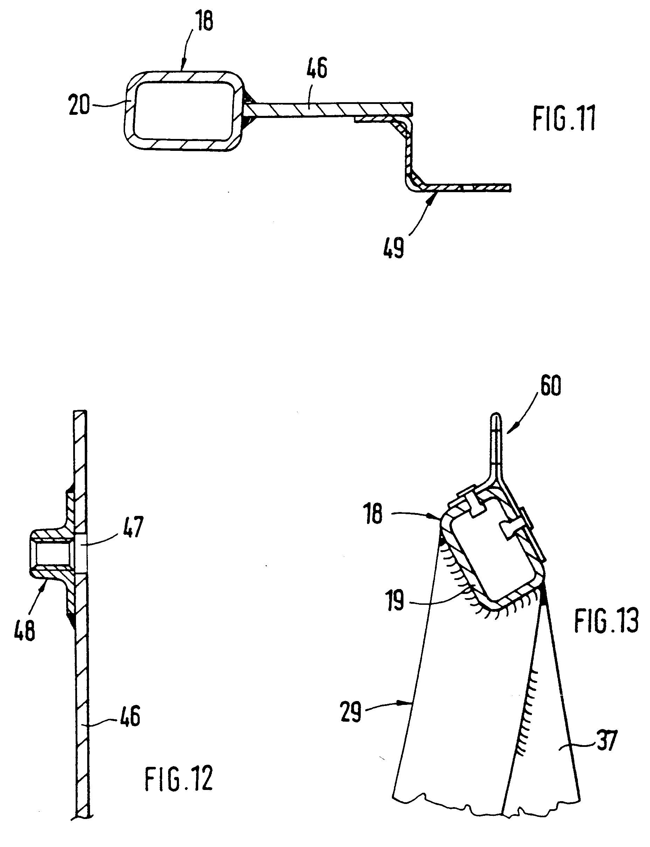

Ferner sind in einem oberen Bereich beiderseits des Stützholmes 29 jeweils winkelförmige Versteifungselemente 38 angeordnet, die mit der Unterseite des querverlaufenden Verbindungssteges 19 und dem Stützholm 29 verbunden sind.
Obere dreieckförmige Abschnitte 39 der Versteifungselemente 38 erstrecken sich über einen wesentlichen Bereich der Quererstreckung des Verbindungssteges 19.
An einem unteren länglichen Abschnitt 40 der Versteifungselemente 38 sind örtlich Käfige 41 mit darin angeordneten Muttern 42 vorgesehen, in die querverlaufende Verriegelungsbolzen 43 eingesetzt sind. Die Verriegelungsbolzen 43 sind mittels Kontermuttern einstellbar ausgebildet und dienen zur Arretierung der schwenkbaren Rückenlehnen 6 in ihrer aufrechten Gebrauchsstellung A (Fig. 6).
Die lösbaren Verriegelungsvorrichtungen für die beiden Rückenlehnen 6 sind nicht näher dargestellt. Bei starrer Ausbildung der Rückenlehnen 6 sind diese fest mit dem Tragrahmen 17 und dem Aufbau verbunden.
Im Bereich der Abstellung 26 der Befestigungsplatte 22 sind beiderseits der vertikalen Versteifungsplatte 37 querverlaufende aufrechte Halterungen 44 angebracht, die mit der Versteifungsplatte 37 und der Befestigungsplatte 22 fest verbunden sind. An jeder Halterung 44 wird ein untenliegender Gurtaufroller 16 der Sicherheitsgurtanordnung 8 in herkömmlicher Weise durch Schrauben befestigt, die durch eine Öffnung der Halterung 44 hindurchgeführt sind (Fig. 8).
In einem unteren Bereich 45 der schrägverlaufenden Schenkel 20 des Rohrbügels 18 sind jeweils plattenförmige Teile 46 angeschweißt, die sich vom Schenkel 20 nach außen hin erstrecken und örtlich Bohrungen 47 aufweisen. Auf einer Seite des Teiles 46 ist ein Aufnahmeteil 48 mit einem Innengewinde angeschweißt und zwar im Bereich der Bohrung 47 (Fig. 11 und 12).
Die Aufnahmeteile 48 dienen zur Befestigung von Kinderrückhaltesystemen an der Hintersitzanlage 1. Ferner sind an den plattenförmigen Teilen 46 Befestigungswinkel 49 angebracht, die zur Halterung einer Verkleidung 50 für den Tragrahmen 17 dienen. Im vorderen Bereich der Halteplatte 31 ist ein weiterer Befestigungswinkel 51 für die Verkleidung 50 angeordnet (Fig. 3).
In einem unteren Bereich der vertikalen Versteifungsplatte 37 sind ferner querverlaufende, horizontal ausgerichtete Lagerzapfen 52 für beide Rückenlehnen 6 sowie darüberliegend angeordnete Winkel 53 vorgesehen. Die beiden Lagerzapfen 52 sind endseitig an einem querverlaufenden Rohr 57 vorgesehen, das die vertikale Versteifungsplatte 37 durchdringt und fest mit dieser verbunden ist. Das Rohr 57 erstreckt sich in Fahrzeugquerrichtung und ist etwa horizontal ausgerichtet. Die Lagerzapfen 52 sind in offene Endabschnitte des Rohres 57 eingeschoben und fest mit dem Rohr 57 verbunden (Fig. 9).
Auf das Rohr 57 sind die Winkel 53 aufgesetzt, an denen die Verkleidung 50 durch Befestigungsschrauben in Lage gehalten ist.
Sämtliche Einzelteile des Tragrahmens 17 sind vorzugsweise durch Schweißen miteinander verbunden.

Die Verkleidung 50 ist von oben auf den Tragrahmen 17 aufgesetzt und im Bereich der Befestigungswinkel 49, 51 sowie der Winkel 53 und 60 mit dem Tragrahmen 17 lösbar verbunden. Die Winkel 53 sind gemäß Fig. 9 auf das Rohr 57 aufgesetzt und mit diesem und der Versteifungsplatte 37 verschweißt. An längsgerichteten Schenkeln 59 des Winkels 53 liegt die Verkleidung 50 an und ist mittels nicht näher dargestellten Schrauben in Lage gehalten.
An der Oberseite des Verbindungssteges 19 ist zwischen den beiden Gurtbandösen 27 ein weiterer Winkel 60 für die Verkleidung 50 vorgesehen. Der Winkel 60 liegt mit unterschiedlich abgestellten Flanschen am Verbindungssteg 19 auf und ist mit diesem durch Nieten, Schweißen oder dgl. verbunden (Fig. 13).
Gemäß Fig. 5 ist die Verkleidung 50 der Kontur des Tragrahmens 17 und der angrenzenden Rückenlehnen 6 sowie des Tunnels 4 angepaßt und fügt sich harmonisch in die Gestaltung der Hintersitzanlage 1 ein.
Benachbart der Gurtbandösen 27 des Tragrahmens 17 weist die Verkleidung 50 zwei mit Abstand zueinander angeordnete schlitzförmige Austrittsöffnungen 54 auf, wobei in jede Austrittsöffnung 54 eine das Gurtband umgebende Rosette 55 aus Kunststoff oder dergleichen eingesetzt ist.
Die Austrittsöffnungen 54 und die oberen Umlenkelemente 14 verlaufen mit Abstand zu einer darunterliegenden oberen Begrenzung der Rückenlehnen 6. Ein unterer, längsgerichteter Abschnitt 56 der Verkleidung 50 erstreckt sich entlang des in Fahrzeugmitte verlaufenden Tunnels 4 und reicht etwa bis zur Vorderkante der danebenliegenden Sitzkissen 7 (Fig. 1).
Gemäß Fig. 15 sind zur besseren Führung des Gurtbandabschnitts 15 im Bereich der Gurtbandösen 27 Führungsteile 61 aus Kunststoff vorgesehen, die einen unteren Bereich der Gurtbandösen 27 umgreifen und um die Rückseite des Verbindungssteges 19 herumgeführt sind. Die Führungsteile 61 sind durch Niete mit der Unterseite des Verbindungsstegs 19 verbunden. An den Führungsteilen 61 liegt der Gurtbandabschnitt 15 an und wird danach umgelenkt.

## Patentansprüche

1. Sicherheitsgurtanordnung (8) für eine Sitzanlage eines Kraftfahrzeuges mit an den Außenseiten der Sitzanlage angeordneten Diagonalgurten (13), deren Gurtbänder durch je ein etwa in Schulterhöhe der Insassen angeordnetes oberes Umlenkelement geführt sind, wobei die benachbart einer Fahrzeuglängsmittelebene verlaufenden oberen Umlenkelemente (14) der Sicherheitsgurtanordnung (8) an einem zwischen den beiden - in Fahrzeugquerrichtung gesehen - nebeneinanderliegend angeordneten Sitzen (2, 3) der Sitzanlage vorgesehenen Tragrahmen (17) angebracht sind, dadurch gekennzeichnet, daß der die Sitze (2, 3) einer Hintersitzanlage (1) nach oben hin überragende Tragrahmen (17) aus einem etwa U-förmig ausgebildeten, sich in Fahrzeugquerrichtung erstreckenden Rohrbügel (18) und einem mit diesem verbundenen, dem Rohrbügel (18) vorgelagerten und etwa in einer Fahrzeugmittellängsebene C-C verlaufenden Stützholm (29) besteht, wobei an einem oberen, querverlaufenden Verbindungssteg (19) des Rohrbügels (18) die Umlenkelemente (14) angeordnet sind und die beiden schräg nach unten und außen gerichteten Schenkel (20) des Rohrbügels (18) mit ihren freien Enden (21) mit einer querverlaufenden Befestigungsplatte (22) fest verbunden sind, die auf eine querverlaufenden Bodenabschnitt (23) der Rückwand (24) aufgesetzt und daran befestigt ist, wogegen das dem Rohrbügel (18) abgekehrte Ende (30) des Stützholmes (29) am benachbarten längsgerichteten Tunnel (4) festgelegt ist.

2. Sicherheitsgurtanordnung nach Anspruch 1, dadurch gekennzeichnet, daß sich der Rohrbügel (18) hinter den beiden Rückenlehnen (6) der Sitze (2, 3) der Hintersitzanlage (1) erstreckt.

3. Sicherheitsgurtanordnung nach Anspruch 1, dadurch gekennzeichnet, daß die Umlenkelemente (14) durch sich in Querrichtung erstreckende ringförmige Gurtbandösen (27) gebildet werden, wobei an jeder Gurtbandöse (27) eine Aussparung (28) zum Einführen des Gurtbandes vorgesehen ist.

4. Sicherheitsgurtanordnung nach Anspruch 1, dadurch gekennzeichnet, daß von einem mittleren Bereich des Verbindungssteges (19) des Rohrbügels (18) ein gebogener, nach unten und vorne gerichteter Stützholm (29) weggeführt ist, dessen unteres, vor den Rückenlehnen (6) der Hintersitzanlage (1) liegendes Ende (30) mit einer längsgerichteten Halteplatte (31) fest verbunden ist, wobei die Halteplatte (31) auf den Tunnel (4) aufgesetzt und an diesen befestigt ist.

5. Sicherheitsgurtanordnung nach einem oder mehreren der vorangegangenen Ansprüche, **dadurch gekennzeichnet**, daß der Rohrbügel (18) und der Stützholm (29) jeweils durch ein gebogenes Rohr, insbesondere durch ein Vierkantrohr, gebildet werden.

6. Sicherheitsgurtanordnung nach Anspruch 4, **dadurch gekennzeichnet**, daß auf ein unteres Ende (30) des Stützholmes (29) ein schuhförmiges Element (32) aufgesetzt ist, das mit dem Stützholm (29) und der Halteplatte (31) fest verbunden ist, wobei sich das Element (32) zur Halteplatte (31) hin kontinuierlich erweitert und mit dem Stützholm (29) und der Halteplatte (31) eine hohlträgerartige Struktur bildet.

7. Sicherheitsgurtanordnung nach Anspruch 1, **dadurch gekennzeichnet**, daß an die der Rückwand (24) zugekehrte Seite des Stützholmes (29) eine vertikal ausgerichtete Versteifungsplatte (37) angeschlossen ist, die mit dem Stützholm (29), der querverlaufenden Befestigungsplatte (22) und der längsgerichteten Halteplatte (31) fest verbunden ist.

8. Sicherheitsgurtanordnung nach Anspruch 4, **dadurch gekennzeichnet**, daß in einem oberen Bereich beiderseits des Stützholmes (29) jeweils Versteifungselemente (38) angeordnet sind, die mit der Unterseite des querverlaufenden Verbindungssteges (19) und den Außenseiten des Stützholmes (29) fest verbunden sind.

9. Sicherheitsgurtanordnung nach Anspruch 8, **dadurch gekennzeichnet**, daß die Versteifungslelemente (38) einstellbare, sich in Fahrzeugquerrichtung erstreckende Verriegelungsbolzen (43) tragen, an denen die Arretierung der Rückenlehnen (6) in ihrer aufrechten Gebrauchsstellung A erfolgt.

10. Sicherheitsgurtanordnung nach Anspruch 7, **dadurch gekennzeichnet**, daß an der Befestigungsplatte (22) des Tragrahmens (17) beiderseits der vertikalen Versteifungsplatte (37) quer verlaufende Halterungen (44) angebracht sind, an denen die Gurtaufroller (16) der Sicherheitsgurtanordnung (8) befestigt sind.

11. Sicherheitsgurtanordnung nach Anspruch 1, **dadurch gekennzeichnet**, daß der Tragrahmen (17) vollständig von einer Verkleidung (50) umgeben ist, die benachbart der Umlenkelemente (14) zwei mit Abstand zueinander angeordnete schlitzförmige Austrittsöffnungen (54) aufweist, wobei in jede Austrittsöffnung (54) eine das Gurtband umgebende Rosette (55) eingesetzt ist.

12. Sicherheitsgurtanordnung nach den Ansprüchen 1 und 11, **dadurch gekennzeichnet**, daß am Tragrahmen (17) örtlich Befestigungswinkel (49, 51) und Winkel (53, 60) zur Halterung der Verkleidung (50) vorgesehen sind.

## Claims

1. A safety-belt arrangement (8) for a seat unit of a motor vehicle with diagonal belts (13) which are arranged on the outer sides of the seat unit and the belt straps of which are each guided through a respective upper deflecting member arranged substantially at the shoulder height of the occupants, wherein the upper deflecting members (14) of the safety-belt arrangement (8) extending adjacent to a longitudinal median plane of the vehicle are attached to a support frame (17) provided between the two seats (2, 3) of the seat unit arranged adjacent to each other as viewed in the transverse direction of the vehicle, **characterized in that** the support frame (17) projecting upwards above the seats (2, 3) of a rear seat unit (1) comprises a tubular hoop (18) constructed substantially in a U-shape and extending in the transverse direction of the vehicle and a supporting pillar (29) connected to the said tubular hoop (18) and situated in front thereof and extending substantially in a longitudinal median plane **C-C** of the vehicle, wherein the deflecting members (14) are arranged on an upper, transversely extending connecting web (19) of the tubular hoop (18), and the two arms (20) of the tubular hoop (18) directed obliquely downwards and outwards are securely connected at the free ends (21) thereof to a transversely extending fastening plate (22) which is mounted on a transversely extending base portion (23) of the rear wall (24) and is secured thereto, whereas the end (30) of the supporting pillar (29) remote from the tubular hoop (18) is fastened to the adjacent, longitudinally orientated tunnel (4).

2. A safety-belt arrangement according to Claim 1, **characterized in that** the tubular hoop (18) extends behind the two rear backrests (6) of the seats (2, 3) of the rear seat unit (1).

3. A safety-belt arrangement according to Claim 1, **characterized in that** the deflecting members (14) are formed by annular belt-strap guides (27) extending in the transverse direction, wherein an aperture (28) is provided in each belt-strap guide (27) for inserting the belt strap.

4. A safety-belt arrangement according to Claim 1, c**haracterized in that** a curved supporting pillar (29) directed downwards and forwards extends away from a central region of the connecting web (19) of the tubular hoop (18), the lower end (30) of the supporting pillar (29) arranged in front of the backrests (6) of the rear seat unit (1) being securely connected to a longitudinally orientated holding plate (31), wherein the holding plate (31) is mounted on the tunnel (4) and is secured thereto.

5. A safety-belt arrangement according to one or more of the preceding Claims, **characterized in that** the tubular hoop (18) and the supporting pillar (29) are each formed by a curved tube, in particular by a square-section tube.

6. A safety-belt arrangement according to Claim 4, **characterized in that** a shoe-shaped member (32) securely connected to the supporting pillar (29) and the holding plate (31) is mounted on a lower end (30) of the supporting pillar (29), wherein the member (32) is continuously widened towards the holding plate (31) and forms a structure in the manner of a hollow support with the supporting pillar (29) and the holding plate (31).

7. A safety-belt arrangement according to Claim 1, **characterized in that** a vertically orientated reinforcement plate (37) is attached to the side of the supporting pillar (29) facing the rear wall (24), the said reinforcement plate (37) being securely connected to the supporting pillar (29), the transversely extending fastening plate (22) and the longitudinally directed holding plate (31).

8. A safety-belt arrangement according to Claim 4, **characterized in that** respective reinforcement members (38) securely connected to the underside of the transversely extending connecting web (19) and the outer sides of the supporting pillar (29) are each arranged in an upper region on both sides of the supporting pillar (29).

9. A safety-belt arrangement according to Claim 8, **characterized in that** the reinforcement members (38) support adjustable locking pins (43) which extend in the transverse direction of the vehicle and on which the backrests (6) are locked in the upright position of use **A** thereof.

10. A safety-belt arrangement according to Claim 7, **characterized in that** transversely extending mountings (44), to which the belt rollers (16) of the safety-belt arrangement (8) are secured, are arranged on both sides of the vertical reinforcement plate (37) on the fastening plate (22) of the support frame (17).

11. A safety-belt arrangement according to Claim 1, **characterized in that** the support frame (17) is completely surrounded by a covering (50), comprising two slot-shaped outlet openings (54) arranged spaced from each other adjacent to the deflecting members (14), wherein a collar (55) surrounding the belt strap is inserted in each outlet opening (54).

12. A safety-belt arrangement according to Claims 1 and 11, **characterized in that** fastening angle members (49, 51) and angle members (53, 60) for mounting the covering (50) are provided locally on the support frame (17).

## Revendications

1. Dispositif de ceinture de sécurité (8) pour les sièges d'un véhicule automobile avec des ceintures diagonales (13) disposées sur les côtés extérieurs du système de sièges, ceintures dont les bandes sont guidées au moyen d'un élément déviateur supérieur disposé à peu près à hauteur des épaules des passagers, les éléments déviateurs supérieurs (14), s'étendant au voisinage d'un plan médian longitudinal du véhicule et appartenant au dispositif de ceinture de sécurité (8), étant montés dans un cadre-support (17) prévu entre les deux sièges (2, 3) disposés l'un à côté de l'autre - si l'on observe dans la direction transversale du véhicule - du système de sièges, caractérisé en ce que le cadre-support (17), dépassant vers le haut des sièges (2, 3) d'un dispositif de sièges arrière (1), est constitué d'un étrier tubulaire (18) réalisé à peu près en forme de U, s'étendant dans la direction transversale du véhicule et d'un montant d'appui (29) relié à cet étrier tubulaire (18) et monté devant l'étrier tubulaire (18) et s'étendant à peu près dans un plan longitudinal médian C-C du véhicule, sur une nervure de liaison (19) supérieure, s'étendant transversalement, de l'étrier tubulaire (18) étant disposés les éléments déviateurs (14) et les deux branches (20), orientées obliquement vers le bas et vers l'extérieur de l'étrier tubulaire (18), étant reliées rigidement par leurs extrémités libres (21) rigidement à une plaque de fixation (22), s'étendant transversalement et posée sur une section de plancher (23), s'étendant transversalement, de la paroi arrière (24) et y étant fixée, alors que, par contre, l'extrémité (30), opposée à l'étrier tubulaire (18), du montant d'appui (29) est fixée sur le tunnel (4) orienté longitudinalement et placé en position voisine.

2. Dispositif de ceinture de sécurité selon la revendication 1, caractérisé en ce que l'étrier tubulaire (18) s'étend derrière les deux dossiers (6) des sièges (2, 3) du système de sièges arrière (1).

3. Dispositif de ceinture de sécurité selon la revendication 1, caractérisé en ce que les éléments déviateurs (14) sont constitués par des oeillets de bande de ceinture (27) à forme annulaire s'étendant en direction transversale, à chaque oeillet de bande de ceinture (27) étant prévu un évidement (28) destiné à introduire la bande de ceinture.

4. Dispositif de ceinture de sécurité selon la revendication 1, caractérisé en ce qu'un montant d'appui (29) cintré, orienté vers le bas et vers l'avant, s'écarte d'une zone médiane de la nervure de liaison (19) de l'étrier tubulaire (18), montant d'appui (29) dont l'extrémité inférieure (20), située devant les dossiers (6) du système de siège arrière (1), est reliée rigidement à une plaque de maintien (31) orientée longitudinalement, la plaque de maintien (31) étant posée sur le tunnel (4) et fixée à celui-ci.

5. Dispositif de ceinture de sécurité selon l'une ou plusieurs des revendications précédentes, caractérisé en ce que l'étrier tubulaire (18) et le montant d'appui (29) sont chacun constitués par un tube cintré, en particulier par un tube à profil tétragonal.

6. Dispositif de ceinture de sécurité selon la revendication 4, caractérisé en ce que, sur une extrémité inférieure (30) du montant d'appui (29), est posé un élément (32) en forme de patin, qui est relié rigidement au montant d'appui (29) et à la plaque de maintien (31), l'élément (32) allant en s'élargissant de façon continue vers la plaque de maintien (31) et constituant, avec le montant d'appui (29) et la plaque de maintien (31), une structure du genre d'une poutre creuse.

7. Dispositif de ceinture de sécurité selon la revendication 1, caractérisé en ce qu'au côté, tourné vers la paroi arrière (24), du montant d'appui (29) est raccordée une plaque de rigidification (37) orientée verticalement qui est reliée rigidement au montant d'appui (29), à la plaque de fixation (22) s'étendant transversalement et à la plaque de maintien (31) orientée longitudinalement.

8. Dispositif de ceinture de sécurité selon la revendication 4, caractérisé en ce que, dans une zone supérieure, de part et d'autre du montant d'appui (29), sont chaque fois disposés des éléments de rigidification (38) qui sont reliés rigidement à la face inférieure de la nervure de liaison (19) s'étendant transversalement et aux faces extérieures du montant d'appui (29).

9. Dispositif de ceinture de sécurité selon la revendication 8, caractérisé en ce que les éléments de rigidification (38) portent des boulons de verrouillage (43) réglables s'étendant dans la direction transversale du véhicule, boulons sur lesquels s'effectue le blocage des dossiers (6), dans leur position d'utilisation A relevée verticalement.

10. Dispositif de ceinture de sécurité selon la revendication 7, caractérisé en ce que, sur la plaque de fixation (22) du cadre-support (17) de part et d'autre de la plaque de rigidification verticale (37), sont montées des fixations (44) s'étendant transversalement, sur lesquelles sont fixés les enrouleurs de ceinture (16) du dispositif de ceinture de sécurité (8).

11. Dispositif de ceinture de sécurité selon la revendication 1, caractérisé en ce que le cadre-support (17) est complètement entouré par un habillage (50) qui présente, au voisinage des éléments déviateurs (14), deux ouvertures de sortie (54) en forme de fentes disposées à distance l'une de l'autre, une rosette (57) entourant la bande de ceinture étant insérée dans chaque ouverture de sortie (54).

12. Dispositif de ceinture de sécurité selon les revendications 1 et 11, caractérisé en ce que des cornières de fixation locales (49, 51) et des cornières (53, 60) destinées à fixer l'habillage (50) sont prévues sur le cadre-support (17).
